# EUROPEAN PATENT SPECIFICATION

(11) **EP 3 015 404 B1**
(45) Date of publication and mention of the grant of the patent: **31.05.2017**
(21) Application number: 14190473.0
(22) Date of filing: 27.10.2014
(51) Int. Cl.: B65G 1/137

(54) **An order picking assembly**
Kommissionierungsanordnung
Ensemble de capture de commandes

(43) Date of publication of application: 04.05.2016
(73) Proprietor: INTRION NV, 1654 Huizingen (BE)
(72) Inventor: Paulussen, Gerard, 1755 Gooik (BE)
(74) Representative: Plas, Axel Ivo Michel

(56) References cited:
- EP-A1- 2 327 644
- DE-A1-102010 010 305

## Description

### Field of the Invention

The invention concerns an order picking assembly in which a predetermined collection is to be transferred by an operator to a target container as listed in a predetermined picking order. The operator manually picks the items listed in the predetermined picking order from a plurality of source containers, which each comprise a plurality of similar items, and subsequently places these items in the target container

### Background of the Invention

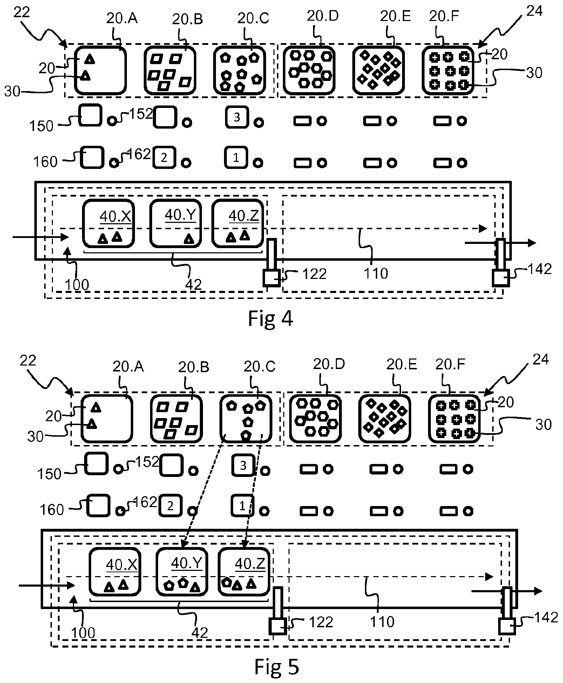

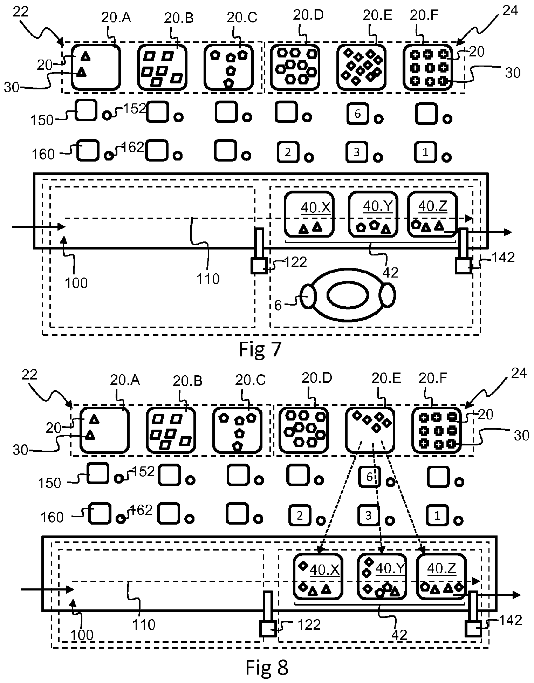

Such an order picking assembly is for example known from EP2327644. This document is considered to represent the closest prior art. This picking assembly provides a linear picking area along which a plurality of source containers are presented side by side. These source containers comprise the items to be picked by the operator. The operator is provided with a target container in which the predetermined collection of items as listed in a picking order is to be transferred form the source containers. The target container is movable along the linear picking area, which generally means it is movable on a track generally parallel to and in front of the source containers from which items are picked by the operator. The linear picking area could be substantially straight, but could alternatively comprise angled, stepped or curved sections along which the source containers from which items are picked by the operator are arranged side by side. During the execution of a picking operation the operator is automatically provided with an empty target container on the target container track. The operator is then provided with a picking plan for example by means of display as shown in Figure 5 of EP23277644. The operator subsequently picks the required number of items from the source containers in accordance with the picking plan. There is further provided an operator panel where the operator can provide a confirmation signal to the control system of the picking assembly when certain items of the picking order have been transferred. Another picking assembly is known form EP2098464 in which items are transferred from a source container to a plurality of target containers by an operator. According to an embodiment as shown in Fig 4, the source container is movable on a track substantially along a picking area along a plurality of target container for distributing the picked items from the source container along the target containers as defined in a picking order. The picking operation is initiated when the operator receives a new source container. The picking order is shown to the operator on the displays of the operator panel as shown in Figure 8 of EP2098464. The central display of the source operator panel shows the number of items to be picked from the source container. The displays of the adjacent target containers show the number of these items to place in the respective target containers as listed in the picking order. The source operator panel and destination operator panels are each provided with an acknowledgement button in order to respectively confirm the displayed number of items has been respectively picked from or placed in the source container or target containers.

The problem with these prior art picking assemblies, is that when the picking order becomes more complex, this means when the mix of items to be transferred to the target container, is to be picked from a higher number of different source containers the efficiency and quality of the picking operation is reduced. This means that when the number of source containers, from which the operator needs to pick items, arranged side by side along the picking area of an operator, is for example higher than five or six, such an arrangement will likely approach or exceed the maximum capacity of the working memory or short term memory of the operator. Even when, as shown in the prior art, dedicated displays show the number of items to be picked from or placed in each specific containers, as the number of containers involved grows, the operator will not be able to keep track of the picking order as a whole which will affect the efficiency of the item manipulations by the operator, for example positioning and repositioning of the target container with respect to the relevant source containers, will become operations that more and more require the attention of the operator and the chance that they will be executed in the most efficient way will decrease. Additionally, after items of three or four source containers have been picked and placed in the target container, it becomes increasingly difficult for the operator to track all items in the target container and subsequently after all items of the picking order have been transferred to double- check completeness of the picking. Further, when only a single container is allowed in the picking area at once, a next picking order can only be commenced when the previous one was completed, thus limiting throughput. On the other hand, when a plurality of target containers are present in the picking area, this affects the quality of the picking operation as the complexity for the operator will rise.

Therefor there still exists a need for such an order picking assembly which overcomes the abovementioned problems and allows for handling a picking order with a higher efficiency, quality and flexibility, even when a handling complex picking orders involving a transfer of items involving a high number of containers.

### Summary of the Invention

According to a first aspect of the invention there is provided an order picking assembly comprising:
- a linear picking area, comprising a linear sequence of at least two picking subranges, each picking subrange comprising a source subset with a predetermined plurality of source containers arranged side by side along the linear picking area;
- at least one target subset comprising said predetermined plurality of target containers,
- a target container transporter configured to position each target subset sequentially along the linear sequence of the picking subranges of the linear picking area;
- a control system configured to:
- receive a picking order for the transfer of a predetermined collection of items from at least one of the source containers to at least one of the target containers of a target subset;
- divide the picking order into a picking sequence comprising at least two picking suborders, each of the picking suborders listing the transfer of items from a respective source subset to a target subset;
- control the target container transporter to sequentially position the target subset in each of the picking subranges of the linear sequence, and to keep the respective target subset positioned in the respective picking subrange until the associated picking suborder is completed.

In this way, even complex picking orders involving a plurality of target containers and source containers can be handled by the picking operator with a high efficiency as the picking order is divided in a plurality of less complex picking suborders and the target subset remains stationary in the respective picking subrange along a subset of the source containers. The picking operator in this way can more efficiently keep track of progress of the picking order and the risk of confusion resulting from frequent repositioning of target containers is reduced, while the groupwise repositioning of the target subsets through the different picking subranges relieves the picking operator from determining the most efficient position for the different target containers during the handling of the picking operation. Additionally this enables the flexibility of operating the order picking assembly by means of a plurality of picking operators, concurrently handling a plurality of picking orders, while still remaining efficiently operable by a single operator when progressing sequentially through the sequence of picking subranges when handling a picking order.

According to an embodiment the control system is further configured to:
- determine a respective picking suborder completion state when the listed items of a respective picking suborder of the picking sequence have been transferred to the target subset;
- control the target container transporter to sequentially position, the respective target subset in each of the picking subranges of the linear sequence ), and to keep the target subset positioned in the respective picking subrange until the associated picking suborder completion state is reached.

In this way an efficient and simple repositioning of the target subsets is enabled which allows for an efficient handling of even complex picking orders.

According to a further embodiment the control system is further configured to:
- determine a picking order completion state when the listed items of the picking order have been transferred to the target subset, and
- control the target container transporter to position the respective target subset out of the linear picking area when the picking order completion state is reached.

In this way the control system is able to determine in a simple and efficient based on the completion of the picking suborders when a picking order was completed.

According to a further embodiment the control system is further configured to position the at least one target subset from its current picking subrange to its next picking subrange of its linear sequence when the picking suborder associated with its current picking subrange is completed.

This enables an optimal movement strategy for the target containers which are moved groupwise from one stationary position to a further stationary postion along the relevant source containers for performing the picking suborder at hand, thereby leading to a higher efficiency while reducing the risk for errors or confusion of the picking operator to a minimum. Additionally the picking operator remains in control of the repositioning of the target containers, as they are only repositioned at the rate at which the picking operator is able to complete the associated picking suborder.

According to a further embodiment the order picking assembly comprises at least two target subsets, and in that the control system is further configured to concurrently perform at least two picking orders, each for a respective target subset, by controlling the target container transporter to concurrently position each of the respective target subsets in a different picking subrange of the linear sequence.

In this way a flexible setup of the order picking assembly is enabled in which a plurality of operators can efficiently cooperate during high throughput periods, each remaining in a particular picking subrange, while during low throughput periods a single operator can sequentially progress through each of these picking subranges in an efficient way.

According to a further embodiment the control system is further configured to further control the target container transporter to transfer the respective target subset from its current picking subrange to its next subrange of the linear sequence only when no other target container is present in this next subrange.

In this way an efficient repositioning of a plurality of concurrent target subsets is realised.

According to a further embodiment the control system is further configured to further control the target container transporter to transfer the respective target subset from its current picking subrange to its next subrange of the linear sequence only when the associated picking suborder of another target subset in this next subrange is completed.

In this way the control system is able to engage in repositioning actions based on the completion of the relevant picking suborders.

According to a further embodiment target container transporter comprises one or more of the following to position the target subset:
- active movement elements;
- passive movement elements combined with controllable movement inhibitors, such as for example an inclined roller track combined with retractable stops.

In this way the target container transporter can be realised in a simple and robust way.

According to a further embodiment the predetermined plurality is an integer in the range of two to seven, preferably three to five.

In this way the picking operator is able to handle complex picking orders involving a high number of source containers, by means of manageable picking suborders involving a plurality of source containers and target containers in way that remains manageable.

According to a further embodiment the linear picking area extends along a linear picking area direction comprising at least one of the following linear shapes or a combination thereof: a straight shape; an angled shape; a U shape; a curved shape; a circular shape.

Such linear picking area allows for an efficient arrangement of the source and target containers for use by the picking operator during the picking operation.

According to a second aspect of the invention, there is provided a method of operating an order picking assembly according to any of the preceding claims, characterised in that the method comprises the steps of the control system:
- receiving a picking order for the transfer of a predetermined collection of items from at least one of the source containers to at least one of the target containers of a target subset;
- dividing the picking order into a picking sequence comprising at least two picking suborders, each of the picking suborders listing the transfer of items from a respective source subset to a target subset;
- controlling the target container transporter to sequentially position the target subset in each of the picking subranges of the linear sequence, and to keep the respective target subset positioned in the respective picking subrange until the associated picking suborder is completed.

### Brief Description of the Drawings

Figures 1 to 11 schematically show different steps of a method of operating an embodiment of the picking assembly according to the invention;
Figure 12 schematically shows an alternative method of operating the embodiment of the picking assembly of Figures 1 to 11; and
Figure 13 schematically shows still a further embodiment of a method of operating a picking assembly of Figures 1 to 11 in which concurrently a plurality of picking orders are handled.

### Detailed Description of Embodiment(s)

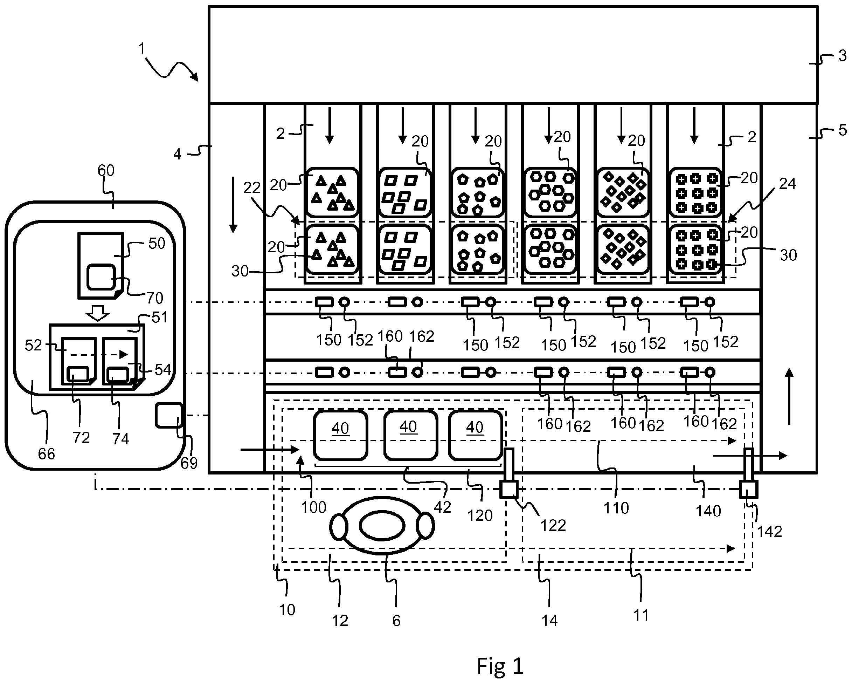

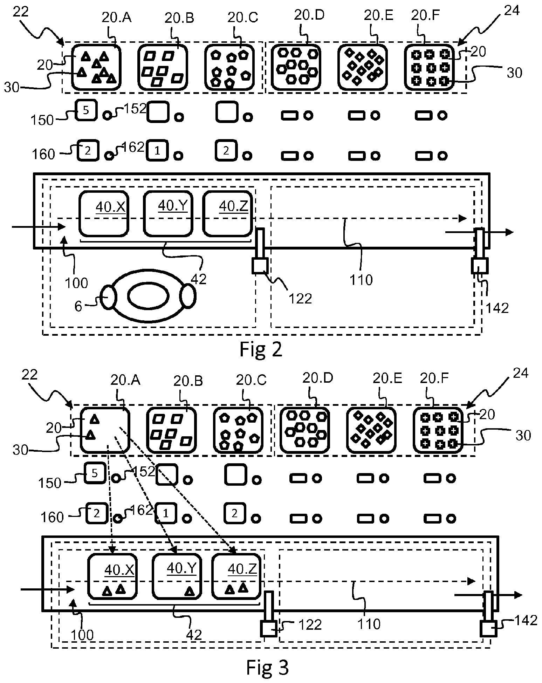

Figure 1 shows an embodiment of an order picking assembly 1, also known as for example a picking station for a picking operator. As shown the picking assembly 1 comprises a linear picking area 10 in which an operator 6 is present for performing the picking operation. During such a picking operation the operator 6 handles a picking order 50 listing the transfer of a predetermined collection of items 30 from source containers 20 to target containers 40. As schematically shown in Figure 1, each of the source containers 20 comprises a plurality of items of predetermined item type, as represented by the item shape. Six such source containers 20 are shown arranged side by side along the linear picking area 10 of the order picking assembly 1 for the picking operator 6. As further shown, these source containers 20 are for example supplied to the operator 6 by means of suitable source container transporters 2, such as a suitable conveyor, from an automated warehouse assembly 3. Optionally, as shown, a suitable buffer comprising one or more source containers 20 for use when the source container 20 currently in use has been emptied or comprising items 30 of a different type for use during subsequent picking operations could be provided. As shown, in the embodiment of Figure 1, the buffer is implemented by providing at least one additional source containers 20 with items 30 of the same item type as the source container 20 in use downstream on the associated source container transporters 2, such that when the downstream container is emptied, after removal the upstream container 20 becomes available for supplying items 30 of that item type. During the picking operation, as will also be explained with reference to Figures 2 to 7, a target subset 42 comprising three target containers 40 moves along the linear picking area 10, generally along the linear picking area direction 110. As shown in the embodiment of Figures 1 to 7, this linear picking area direction 110 of the linear picking area 10 is straight and extends from the left side to the right side, along and parallel to the side of the source containers 20 that faces the operator. In this way during the picking operation, the target subset 42 with the three target containers 40 will move from left to right along the six source containers 20, referenced as 20.A, 20.B, 20.C, 20.D, 20.E and 20.F in Figures 2 to 7, comprising a sequence of items with an exemplary item type referenced as A, B, C, D, E and F. The target subset 42 comprising the three target containers 40 arranged side by side along the linear picking area direction 110 and referenced as 40.X, 40.Y, 40.Z in Figures 2 to 7, as shown, is for example moved along a suitable target container transporter 100, such as a suitable container conveyor, of which the movement direction is generally aligned with the linear picking area direction 110 along the six source containers 20 that are also arranged side by side along this linear picking area direction 110 and which are supplied by source container transporters 2 of which the movement direction is generally transverse to that of the target container transporter 100. As further shown, according to the embodiment of Figures 1 to 7, the target containers 40 of the target subset 42 can be provided to the picking area 10 for a picking operation defined in a predetermined picking order 50 from the automated warehouse assembly 3 by means of target container 40 supply system 4, for example in the form of a suitable conveyor. Subsequently, during the picking operation, the target subset 42 comprising the three target containers 40 is moved along the linear picking area direction 110 along the linear picking area 10 on the target container transporter 100. Finally, after the picking operation is completed, the three target containers 40 of the target subset 42 are retrieved by a target container 40 retrieval system 5 in the form of a suitable conveyor that feeds these target containers 40 back to the automated warehouse 3 for further handling or storage.

It is clear that according to alternative embodiments another number of source containers 20 arranged side by side along the picking area 10 could be used, such as for example four, five, seven, eight, nine, ten or more. As long as in general a plurality of source containers 20 is arranged side by side along the linear picking area 10, these source containers 20, each comprising a plurality of similar items 30. It is also clear that according to alternative embodiments instead of three target containers 40 the target subset 42 could comprise a different number of target containers 40, such as for example two, four, five, etc. As will be explained in further detail below, in general the target subset 42 comprises a predetermined plurality N of target containers 40 which corresponds to the predetermined plurality N of source containers 20 that are arranged in a picking subrange 12, 14.

As further shown in the embodiment of Figure 1, the order picking assembly further comprises a control system 60, which is for example a suitable computing system comprising a processor, associated memory, a suitable network communication interface, suitable input and output devices, etc. As shown the control system 60 comprises a picking suborder module 66 configured to receive a predetermined picking order 50 for the operator 6. Such a picking order 50, lists a predetermined collection of items 30 that is to be transferred from the source containers 20 to the target containers 40 by the operator 6. Such a picking order 50 could for example list a collection for:
- target container 40X of: two items 30 of item type A; two items 30 of item type E; and four items 30 of item type F;
- target container 40Y of: one item 30 of item type A; two items 30 of item type C; three items 30 of item type E; and two items 30 of item type F; and
- target container 40Z of: two items 30 of item type A; one item 30 of item type C; one items 30 of item type E; and three items 30 of item type F.

It is clear that any suitable alternative collections of items 30 from the source containers 20, are available for use as a picking order 50 to the respective target containers 40 or the target subset 42. This exemplary picking order 50 could be displayed to the operator 6 by the control system 60 by means of suitable output devices. As shown in the embodiment of Figure 1, each of the source containers 20 arranged along the picking area 10, comprises an associated picking display 150, which is suitably connected to the control system 60. In this way the control system 60 can output the picking order 50 to the operator 6 by displaying the required number of items 30 to be picked from each respective source container 20 on the associated source picking display 150. As will be explained in more detail with reference to Figure 2, for the picking order 50 shown above, the source picking display 150 associated with source container 20.A, with items 30 of item type A could for example display the number five. As further shown, according to the embodiment of Figure 1, each of these source containers 20 also comprises an associated source picking confirmer 152 next to the picking display 150. This source picking confirmer 152 comprises for example one or more suitable buttons or alternative input devices that for example enable the operator 6 to confirm or adjust the number of items 30 that have been picked from the associated source container 20. Additionally, each of the target containers 40 of the target subset 42 arranged side by side in the picking area 10, is positioned in association with a target picking display 160, which is suitably connected to the control system 60. In this way the control system 60 can output the picking order 50 to the operator 6 by displaying the required number of items 30 to be transferred to each respective target container 40 on the associated target picking display 160. As will be explained in more detail with reference to Figure 2, for the picking order 50 shown above, the target picking display 160 associated with target container 40.X, with items 30 of item type A could for example display the number two, that associated with target container 40.Y the number one and that associated with target container 40.Z the number two, thereby clearly displaying the desired distribution of the five items picked from source container 20.A among the target containers 40 of the subset 42. As further shown, each of these target container displays 160 also comprises an associated target picking confirmer 162 next to the target picking display 160. This target picking confirmer 162 comprises for example one or more suitable buttons or alternative input devices that for example enable the operator 6 to confirm or adjust the number of items 30 that have been transferred to the associated target container 40. In this way the control system 60 is able to determine a picking order completion state 70 when the listed items 30 of the picking order 50 have been transferred from the source containers 20 to the target containers 40 of target subset 42.

As further shown in Figure 1, the linear picking area 10 comprises a linear sequence 11 of at least two picking subranges 12, 14 which are arranged side by side along the linear picking area direction 110. Along the first picking subrange 12 of the linear sequence 11 a first source subset 22 of the source containers 20, comprising the three leftmost source containers 20 is arranged. This thus means that along the first picking subrange 12, the source containers 20.A, 20.B and 20.C are arranged side by side along the picking area 10 which respectively comprise items 30 of item type A, B and C. A second source subset 24 comprising the three subsequent source containers 20.D, 20.E and 20.F, respectively comprising items of item type D, E and F are arranged along the second picking subrange 14 of the linear sequence 11. It is thus clear that each of the source subsets 22 comprises three source containers 20 arranged side by side along the linear picking area direction 110. Additionally, as further shown in the first picking subrange 12 in the state shown in Figure 1 and 2, there is provided a target subset 42 comprising three target containers 40.X, 40.Y and 40.Z, which are arranged side by side along the linear picking area direction 110 on the target container transporter 100. It is thus clear that each of the source subsets 22, 24 and the target subset 42 comprise respectively three source or target containers 20, 40. It is further clear that according to alternative embodiments a different plurality of containers could be present in these subsets, such as for example two or four, etc. as long as in general a predetermined plurality of N source containers 20 is arranged in each of the source subsets 22, 24 and the same predetermined plurality of N target containers is arranged in the at least one target subset 42.

The control system 60, as shown, comprises a picking suborder module 66 configured to divide the picking order 50, which lists the transfer of items 30 from all source containers 20 to the target containers 40 of a target subset 42, into a picking sequence 51 comprising two picking suborders 52, 54. The first picking suborder 52 lists the transfer of items 30 associated with the first source subset 22 of source containers 20 arranged along the first picking subrange 12 of the linear sequence 11 to the target subset 42. For the example of the picking order 50 given above the first picking suborder 52 thus for example lists a collection for:
- target container 40X of: two items 30 of item type A;
- target container 40Y of: one item 30 of item type A; two items 30 of item type C; and
- target container 40Z of: two items 30 of item type A; one item 30 of item type C. The second picking suborder 54 lists the transfer of items 30 associated with the second source subset 24 of source containers 20 arranged along the second picking subrange 14 of the linear sequence 11. For the example of the picking order 50 given above, the second picking suborder 54 thus for example lists a collection for:
- target container 40X of: two items 30 of item type E; and four items 30 of item type F;
- target container 40Y of: three items 30 of item type E; and two items 30 of item type F; and
- target container 40Z of: one items 30 of item type E; and three items 30 of item type F.
In general, each of the picking suborders 52, 54 thus lists the transfer of items 30 associated with the respective source subset 22, 24 of source containers 20 arranged along the respective picking subranges 12, 14 of the linear sequence 11 to the target containers 40 of the target subset 42. As will be explained in more detail below the picking suborder module 66 is configured to determine a first picking suborder completion state 72 when the listed items 30 of a first picking suborder 52 of the picking sequence 51 have been transferred to the target containers 40 of the target subset 42. The picking suborder module 66 is also able to determine a second picking suborder completion state 74 when the listed items 30 of a second picking suborder 54 of the picking sequence 51 have been transferred to the target containers 40 of the target subset 42.

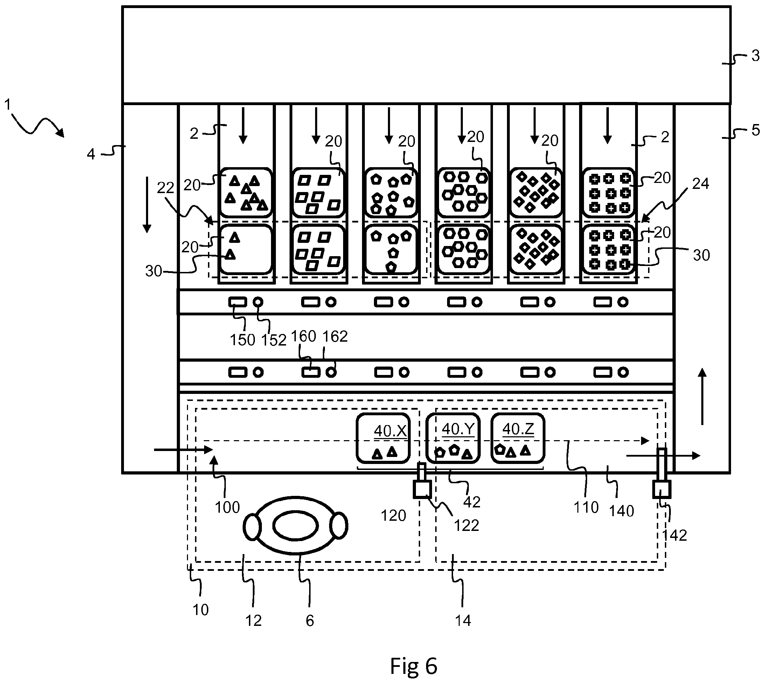

As shown in Figure 1 and explained above, during an initial step of the picking operation, the control system 60 receives the picking order 50 and provides it to the picking suborder module 66, which divides the picking order 50 into a picking sequence 51 comprising a first picking suborder 52 and second picking suborder 54. The first picking suborder 52 is displayed to the operator 6 by means of the source picking displays 150 associated with the source containers 20.A, 20.B and 20.C of the first source subset 22 of the source containers 20 arranged along the first picking subrange 12, and the target picking displays 160 associated with each of the target containers 40.X, 40.Y and 40.Z of the target subset 42 when positioned in this first picking subrange 12. Three empty target containers 40.X, 40.Y, 40.Z are provided to the target container transporter 100, which according to the embodiment of Figure 1 for example comprises an inclined roller track forming a conveyor that automatically feeds the three target containers 40.X, 40.Y, 40.Z, side by side, thus forming a target subset 42, along the linear picking area direction 110, from left to right, under the influence of gravity acting on the target container 40. The target container transporter 100 comprises a first conveyor part 120 arranged in the first picking subrange 12 and an associated first movement inhibitor 122, which is shown to be a retractable stop 122 connected to the control system 60, which is able to control this retractable stop 122 such that it switches between a blocking position, such as shown in Figure 1, in which it blocks the movement of the target subset 42 on the container transporter 100 such that it remains positioned in the first picking subrange 12; and a release position, as will be explained with reference to Figure 6, in which it allows movement of the target subset 42 from the first picking subrange 12 to the second picking subrange 14 of the linear sequence 11.

As shown in more detail in Figure 2, the operator 6 is then presented with a first part of the first picking suborder 52 by means of the numbers displayed on the source picking displays 150 and the target picking displays 160 associated with the first picking subrange 12. As already explained above the source picking display 150 along the source container 20.A displays that five items 30 of item type A need to be picked from source container 20.A and that these five items 30 need to be distributed amongst the target subset 42 such that respectively, as displayed on their associated target picking displays 160 two, one and two of these picked items are transferred to the respective target containers 40.X, 40.Y and 40Z which are positioned in the first picking subrange 12.

As shown in Figure 3, during a subsequent step of the picking operation, the operator 6 picks five items 30 of item type A from the source container 20, which is the amount displayed on its associated source picking display 150, and places two of them in the target container 40.X, one in target container 40.Y and two in target container 40.Z, in accordance with the amount displayed on their associated target picking display, thereby transferring the required items 30 of item type A from its source container 20.A to the target containers 40 of target subset 42 that is still positioned in the first picking subrange 12. The operator 6 will for example acknowledge to the control system 60 each time when placing the required amount of items as displayed on the target picking display 160 of into the associated target container 40 by pressing the associated target picking confirmer 162. The operator 6 will thus for example pick five items 30 of item type A out of source container 20.A, place two of them in target container 40.X and acknowledge this by means of its associated target picking confirmer 162, subsequently place one item 30 in target container 40.Y and acknowledge this by means of its associated target picking confirmer 162 and finally place two items 30 in target container 40.Z and also acknowledge this by means of its associated target picking confirmer 162. Alternatively the operator 6 could for example pick two items 30 of item type A out of source container 20.A, place two of them in target container 40.X and acknowledge this by means of its associated target picking confirmer 162, subsequently pick one item out of source container 20.A and place this one item 30 in target container 40.Y and acknowledge this by means of its associated target picking confirmer 162; and finally pick two items out of source container 20.A and place these two items 30 in target container 40.Z and also acknowledge this by means of its associated target picking confirmer 162. It is clear that from this input by means of the target picking confirmers 162 associated with the target containers 40 of the target subset 42 when positioned in the first picking subrange 12, the control system 60 is able to determine that the first part of the first picking suborder 52 as displayed on the source displays 150 associated with source container 20.A and the target displays 160 associated with target containers 40.X, 40.Y, 40.Z of the target subset 42, is completed as the acknowledgement of the transfer of two, one and two items to these target containers 40 of the target subset 42 implies the picking of five items 30 from the source container 20A. It is clear that according to alternative embodiments the source picking confirmer 152 could optionally be used to acknowledge the number of items picked from a specific source container 20 or to adjust the number displayed on the source picking display 150 in order to adjust the number of items picked from this source container 20, for example when instead of the required five items only four or less such items are still available in the source container 20, for example as the result of a mismatch between the stored contents of the source container 20 in a database available to the control system 60 and the actual contents of the source container 20. In such a case the control system is informed by the adjusted number of available items in the source container 20, and after removal of the empty source container can present a new source container 20 comprising additional items of this item type, for example while displaying the remaining amount of items to be picked from this new source container in order to complete this part of the picking suborder. For example, when in the example described above relating to the first part of the first picking operation 52, five items need to be picked from source container 20.A and only four are still available. The operator could, after picking four items 30, adjust the value displayed on the source picking display 150 by means of the source picking confirmer to a value of 4. This empty source container 20.A can then be removed and the operator can then be presented a new source container 20.A, which is for example already available in the buffer on the source container transporters 2, or if not could for example be retrieved from the automated warehouse 3 under control of the control system 60. When this new source container 20.A is then available to the operator 6, the associated source picking display 150 can then display the value of 1 which is the remaining amount of items 30 that need to be picked from this new source container in order to complete the first part of this first picking suborder 52. Subsequently the operator 6 can then pick this remaining amount of items and distribute it suitably among the target containers 40 of the target subset and acknowledge this, for example by means of their associated target picking confirmers 162. It is clear that in such a situation also the target picking confirmers 162 can be used for example to adjust the displayed value on their associated target picking displays in order to confirm a different number of items transferred to the respective target container 40 of the target subset 42. For example in the situation described above where in first instance only four items are available in source container 20.A, the operator could transfer two items as displayed on its target picking display 160 to target container 40.X and confirm this by means of the associated target picking confirmer 162, as displayed on its target picking display 160 one item could be transferred to target container 40.Y and confirmed by its target picking confirmer 162 and subsequently only one item remains to be placed into the target container 40.Z. This can be acknowledged to the control system 60 by adjusting the value displayed on this target picking display 160 from two to one by means of the associated target picking confirmer 162 in order to aid the picking operator 6 to deposit the remaining items picked from the new source container 20.A into the correct target containers 40 of the target subset 42. Subsequently after the picking operator 6 deposited this remaining item into the target container 40.Z this can then be acknowledged to the control system 60 by means of the associated target picking confirmer 162.

It is clear that optionally the source picking displays 150 and target picking displays could interactively react to the inputs provided by the picking operator 6 by means of the source picking confirmers 152 and the target picking confirmer, for example by adjusting the displayed values, for example reducing or removing the respective values after confirmation that they were transferred to the respective target container 40 of the target subset or for example making use of a change of colour or another suitable status indicator in order to output to the operator for example which values present on the target picking displays, relate to target containers of the target subset 42 in which still items need to be placed and to which target containers of the target subset 42 the required number of items has already been transferred. It is further also clear that the respective source and target picking displays and their associated source and target picking confirmers can be implemented in alternative ways, than that displayed in the embodiment of Figures 1 to 11, and that they comprise any suitable input and output device by means of which the picking operator is able to receive and provide the above described information. It is even possible that one or more of these functionalities is integrated into a single functional unit such as for example a touch screen, or the like.

Subsequently, as shown in Figure 4, the operator 6 is then presented with a further part of the first picking suborder 52 by means of the numbers displayed on the source picking displays 150 and the target picking displays 160 associated with the first picking subrange 12. In line with the example first picking suborder 52 referenced above the source picking display 150 along the source container 20.C displays that three items 30 of item type C need to be picked from source container 20.C and that these three items 30 need to be distributed amongst the target subset 42 such that respectively, as displayed on their associated target picking displays 160 none, one and two of these picked items are transferred to the respective target containers 40.X, 40.Y and 40Z which are positioned in the first picking subrange 12. As shown in Figure 5, similar as explained above with reference to Figure 3 for the first part of the first picking suborder 52, subsequently the picking operator 6 will execute this further part of the first picking suborder 52 by transferring the required number of items from the source container 20.C to the containers 40 of the target subset 42 as displayed on their associated source picking display 150 and target picking displays 160 and additionally confirm or adjust any such transfer by means of their associated target picking confirmers 162 and source picking confirmers 152. When the control system 60 in this way receives confirmation from the picking operator 6 that also this further part of the first picking suborder 52 has been completed, as all items to be transferred as listed in the first picking suborder 52 have been transferred. The picking suborder module 66 of the control system 60, as schematically shown in Figure 1, will then determine a first picking suborder completion state 72 as all items 30 listed in the first picking suborder 52 have been transferred from the source containers 20.A, 20.B, 20.C along the first picking subrange 12 to the target containers 40.X, 40.Y, 40.Z of the target subset 42. It is further clear, that as described above, the control system 60 by means of the retractable stop 122 keeps the target subset 42 positioned in its associated first picking subrange 12 until the first picking suborder is completed. The target subset 42 remains there in a stationary position which is advantageous in reducing the risk for confusion of the picking operator 6 during handling of the picking operation.

As shown in Figure 6 the control system 60 upon determination of this first picking suborder completion state 72 controls the container transporter 100 such that the retractable stop 122 of the first movement inhibitor 122 is switched to its release position. This allows the target containers 40 of the target subset 42, that form a side by side sequence along the linear picking area direction 110, to move automatically under the influence of gravity along the inclined roller track of the container transporter 100 from the first picking subrange 12 to the second subrange 14, which is the next subrange along the linear sequence 11.

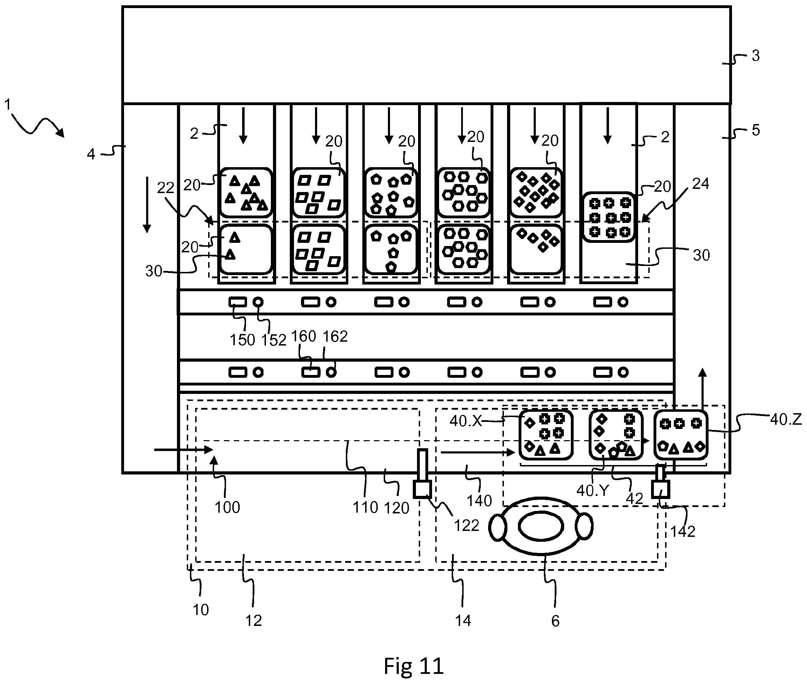

As shown in Figure 7, subsequently the target containers 40 of the target subset 42 keep on moving along a second conveyor part 140 arranged in the second picking subrange 14 until it reaches an associated second movement inhibitor 142, which is shown to be a similar retractable stop 142 connected to the control system 60 as that of the first movement inhibitor 122. Similarly the control system 60 is also able to control this second retractable stop 142 such that it switches between a blocking position, such as shown in Figure 5, in which it blocks the movement of the target containers 40 of the target subset 42 on the container transporter 100 such that the target subset remains positioned in the second picking subrange 14; and a release position, as will be explained with reference to Figure 11, in which it allows movement of the target container 40 from the second picking subrange 14 further along the linear sequence 11 to the downstream end of the second picking subrange 14, which in this embodiment also forms the downstream end of the picking range 10.

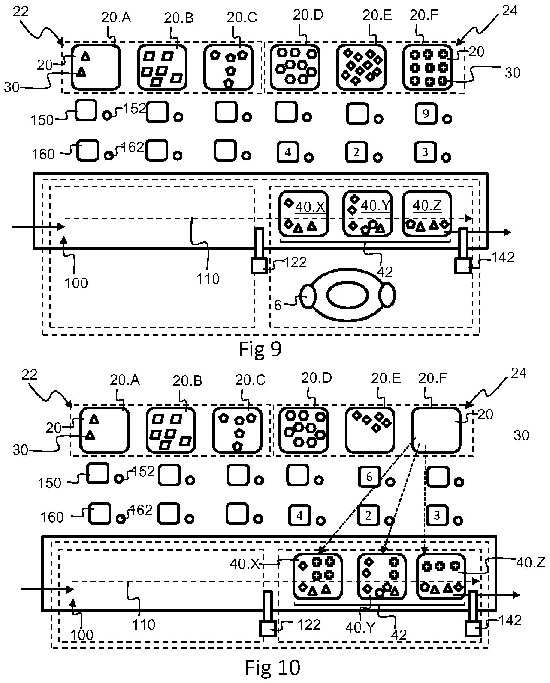

Now that, as shown in Figure 7, the target container is positioned in the second picking subrange 14, a first part of the second picking suborder 54 is displayed to the operator 6 by means of the source picking displays 150 associated with the source containers 20 of the second source subset 24 of source containers 20. As shown, the second picking suborder 54 is displayed to the operator 6 by means of the source picking displays 150 associated with the source containers 20.D, 20.E and 20.F of the second source subset 24 of the source containers 20 arranged along the second picking subrange 14, and the target picking displays 160 associated with each of the target containers 40.X, 40.Y and 40.Z of the target subset 42 when positioned in this second picking subrange 14. In line with the example second picking suborder 54 referenced above the source picking display 150 along the source container 20.E displays that six items 30 of item type E need to be picked from source container 20.E and that these six items 30 need to be distributed amongst the target subset 42 such that respectively, as displayed on their associated target picking displays 160 two, three and one of these picked items are transferred to the respective target containers 40.X, 40.Y and 40Z which now remain positioned in the second picking subrange 14. As shown in Figure 8, similar as explained above with reference to Figure 3 for the first part of the first picking suborder 52, subsequently the picking operator 6 will execute this first part of the second picking suborder 54 by transferring the required number of items from the source container 20.E to the target containers 40 of the target subset 42 as displayed on their associated source picking display 150 and target picking displays 160 and additionally confirm or adjust any such transfer by means of their associated target picking confirmers 162 and source picking confirmer 152. When the control system 60 in this way receives confirmation from the picking operator 6 that this first part of the second picking suborder 54 has been completed, the picking operation will continue to a further part of the second picking suborder 54 as shown in Figure 9.

As shown in Figure 9, the picking operator 6 is then presented with a further part of the second picking suborder 54 by means of the numbers displayed on the source picking displays 150 and the target picking displays 160 associated with the second picking subrange 14. In line with the example second picking suborder 52 referenced above the source picking display 150 along the source container 20.F displays that nine items 30 of item type F need to be picked from source container 20.F and that these three items 30 need to be distributed amongst the target subset 42 such that respectively, as displayed on their associated target picking displays 160 four, two and three of these picked items are transferred to the respective target containers 40.X, 40.Y and 40Z which are positioned in the first picking subrange 12. As shown in Figure 10, similar as explained above with reference to Figure 3 for the first part of the first picking suborder 52, subsequently the picking operator 6 will execute this further part of the first picking suborder 52 by transferring the required number of items from the source container 20.C to the containers 40 of the target subset 42 as displayed on their associated source picking display 150 and target picking displays 160 and additionally confirm or adjust any such transfer by means of their associated target picking confirmers 162 and source picking confirmers 152. When the control system 60 in this way receives confirmation from the picking operator 6 that also this further part of the second picking suborder 54 has been completed, as all items to be transferred as listed in the second picking suborder 54 have been transferred. The picking suborder module 66 of the control system 60 will then determine, as schematically shown in Figure 1, a second picking suborder completion state 74 as all items 30 listed in the first picking suborder 52 have been transferred from the source containers 20.D, 20.E, 20.F along the second picking subrange 14 to the target containers 40.X, 40.Y, 40.Z of the target subset 42. It is further also clear, that as described above, the control system 60 by means of the retractable stop 142 keeps the target subset 42 positioned in its associated second picking subrange 14 until the second picking suborder 54 is completed. During the second picking suborder 54, the target subset 42 also remains in a stationary position which is advantageous in reducing the risk for confusion of the picking operator 6 during handling of the picking operation.

As shown in Figure 11, the control system 60 upon determination of this second picking suborder completion state 74 controls the container transporter 100 such that the retractable stop 142 of the second movement inhibitor 142 is switched to its release position. This allows the target containers 40 of the target subset 42, to move automatically under the influence of gravity along the inclined roller track of the container transporter 100 from the second picking subrange 14 beyond the downstream end of the second subrange 14, for example to the a target container 40 the retrieval system 5 in the form of a suitable conveyor that feeds these target containers 40 back to the automated warehouse 3 for further handling or storage. It is clear that according to this embodiment the downstream end of the second picking subrange 14 also forms the downstream end of the picking range 10, as in this embodiment there is no next picking subrange in the linear sequence 11, because the second subrange 14 is the last subrange of the linear sequence 11.
It is clear that according to alternative embodiments instead of two picking subranges 12, 14, a linear sequence 11 with three, four or more subranges is possible, each of the subranges comprising a non-empty subset of the source containers arranged side by side along the picking range 10. In general the control system 60 is then configured to control the target container transporter 100 to sequentially position, the target containers 40 of the respective target subset 42 in each of the picking subranges 12, 14 of the linear sequence 11 in function of the respective picking suborder completion state 72, 74 as explained above. When the target subset 42 is positioned in the last picking subrange of the linear sequence 11 and the corresponding picking suborder completion state is determined by the picking suborder module 66, then picking suborder module 66 is able to determine the picking order completion state 70, as all the listed items of the picking order 50 have been transferred. Subsequently a new picking order 50 can be received at the picking suborder module 66 and the picking operation can be executed as explained above, in which the control system 60 divides this new picking order 50 into a picking sequence 51 comprising at least two picking suborders 52, 54, each of the picking suborders 52, 54 listing the transfer of items 30 from a respective source subset 22, 24 to a target subset 42. For the embodiment of the picking assembly according to Figures 1 to 11, this means that three new empty target containers 40 of a new target subset 42 are provided to the first picking subrange 12 as shown in Figure 1 and the picking operation for the new picking order 50 is subsequently executed similarly as explained with reference to Figures 2 to 11 above in which the control system 60 controls the target container transporter 100 to position the target container 40 from its current, first picking subrange 12 to its next, second picking subrange 14 of its linear sequence 11 when receiving the picking suborder completion state 72 of the picking suborder 52 associated with its current, first subrange 12. This thus means that in general the target container transporter 100 is controlled by the control system 60 to sequentially position the target subset 42 in each of the picking subranges 12, 14 of the linear sequence 11, and to keep the respective target subset 42 positioned in the respective picking subrange 12, 14 until the associated picking suborder 52, 54 is completed. The control system 60 then determines a picking order completion state 70 when the listed items 30 of the picking order 50 have been transferred to the target subset 42 and controls the target container transporter 100 to position the respective target subset 42 out of the linear picking area 10 when this picking order completion state 70 is reached.

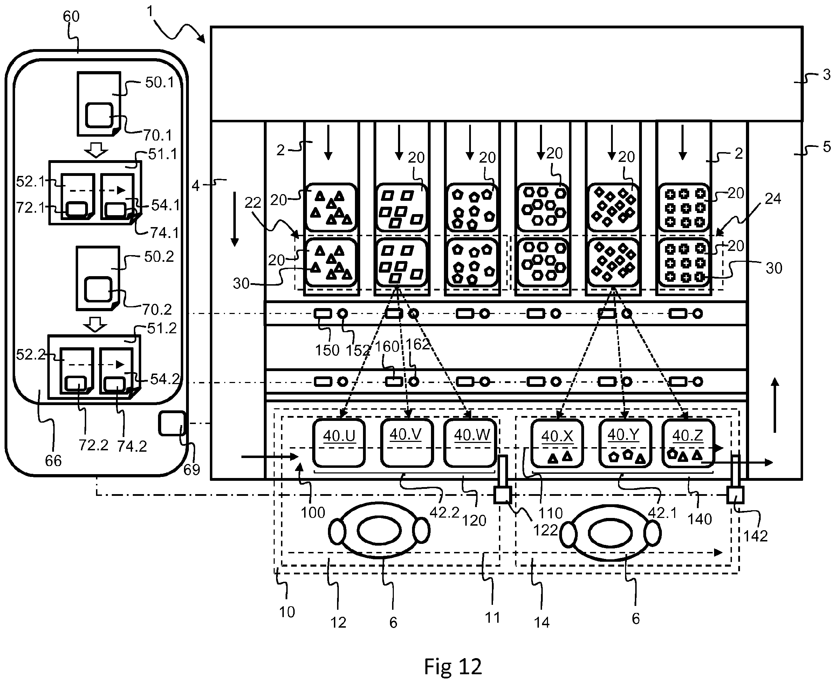

Figure 12 schematically shows an alternative method of operating the embodiment of the picking assembly of Figures 1 to 11. According to this embodiment the control system 60 is configured to concurrently perform two picking orders 50.1, 50.2 received at its picking suborder module 66. As shown a first picking order 50.1 for a first target subset 42.1 comprising target containers 40.X, 40.Y, 40.Z has already proceeded from the first picking subrange 12 to the second picking subrange 14 after the first picking suborder completion state 72.1 was reached for the corresponding first picking suborder 52.1 of the first picking order 50.1. Concurrently a second picking order 50.2 for a second target container 40.2 is initiated by controlling the target container transporter 100 to concurrently position that second target subset 42.2 comprising target containers 40.U, 40.V, 40.W in the first picking subrange 12 of the linear sequence 11 for execution of the first picking suborder 52.2 associated with the second picking order 50.2. In this way the operator 6 can concurrently handle two picking orders 50.1, 50.2 at the same order picking assembly 1, thus increasing efficiency as a subsequent picking order can already be engaged when a previous picking order is not entirely completed, for example because the operator 6 needs to await a suitable source container 20 to be provided in replacement of a previously emptied source container. Similar elements of relating to both picking orders 50.1 and 50.2 have been referenced by means of the same references as used in the embodiment of Figures 1 to 11, and have been extended by means of ".1" for the first picking order 50.1 and ".2" for the second picking order 50.2. Additionally as shown in Figure 12, this also enables a flexible setup of the order picking assembly 1 in which two operators 6 can efficiently cooperate during handling of two concurrent picking orders 50. A first operator 6 handles the respective first picking suborders 52.1, 52.2 in the first picking subrange 12 and a second operator 6 handles the respective second suborders 54.1, 54.2 in the second picking subrange 14. This increases flexibility of the order picking assembly 1 as it can be operated efficiently with a plurality of picking operators 6 for maximizing throughput, for example during temporary peak load periods, but also allows an efficient operation by a single operator 6 during low load periods in which throughput can be reduced. It is clear that as shown, when concurrently performing at least two picking orders 50, in general the control system 60 is configured to control the target container transporter 100 to concurrently position each of the respective target subsets 42.1, 42.2 in a different picking subrange 12, 14 of the linear sequence 11.

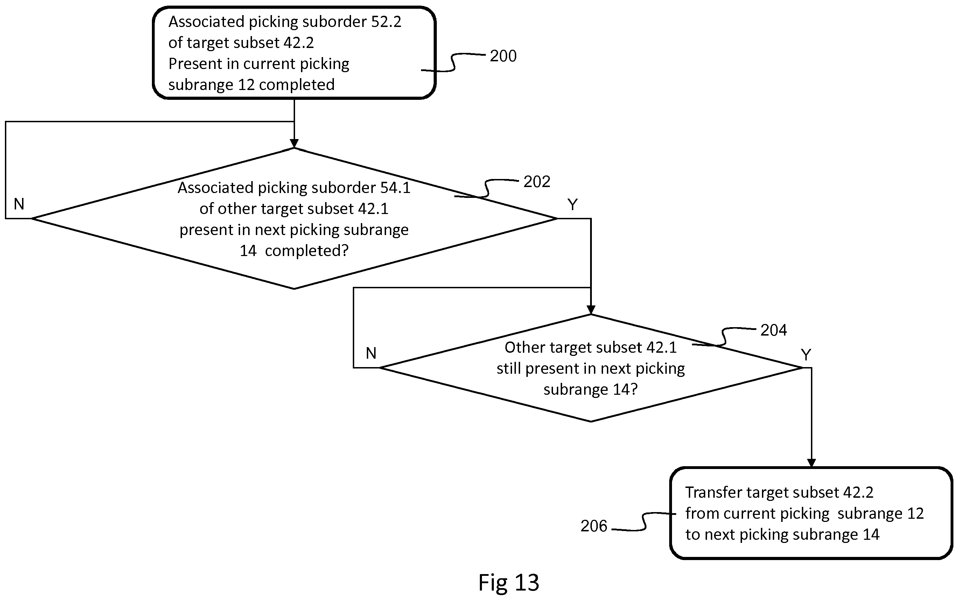

Figure 13 schematically shows a flow chart of an embodiment of a method of operating the picking assembly of Figure 12 for concurrently performing at least two picking orders 50. As shown the method comprises the steps of the control system 60 controlling the target container transporter 100 to transfer the respective target subset 42 from its current picking subrange 12 to its next picking subrange 14 of the linear sequence 11 at step 206 only when no other target subset 42 is present in this next subrange 14 as shown at step 204. For the embodiment shown in Figure 12, this means that the control system 60 controls the target container transporter 100, to move the target subset 42.2 associated with the second picking order 50.2 only from the first picking subrange 12 to the second picking subrange 14, when the target subset 42.1 is no longer present in this second picking subrange 14 as shown at step 204, for example after completion of the first picking order 50.1 associated with this target subset 42.1 and when this target subset 42.1 was moved out of the second picking subrange 14. In general this thus means that for an embodiment in which at least two picking orders 50 are concurrently performed, when the control system 60 determines that the associated picking suborder 52.2 of target subset 42.2 present in current picking subrange 12 has completed, as shown at step 200, the control system 60 controls the target container transporter 100 to transfer the respective target subset 42.2 from its current picking subrange 12 to its next subrange 14 of the linear sequence 11 only when the associated picking suborder 54.1 of another target subset 42.1 in this next subrange 14 is completed, as shown at step 202.

It is clear that, depending on the number of picking subranges 12, 14 present in the linear sequence 11, according to alternative embodiments a different number of concurrent picking orders 50 can be executed. This means that when there are for example three picking subranges, there can be executed a maximum of three picking orders 50 concurrently. Four or five picking subranges are also possible, however this raises complexity of the order picking assembly 1.

It is further clear that although the embodiments of the target container transporter 100 disclosed above comprising an inclined roller track combined with retractable stops, alternatively could comprise other suitable passive movement elements combined with controllable movement inhibitors, or according to still further alternative embodiments could comprise active movement elements, such as for example controllable conveyors.

Still further, although the embodiments of the linear picking area 10 according to the embodiments shown above, extends along a linear picking area direction 110 comprising a straight shape, according to alternative embodiments the linear picking area direction 110 could comprise at least one of the following linear shapes or a combination thereof: a straight shape; an angled shape; a U shape; a curved shape; a circular shape.

## Claims

1. An order picking assembly (1) comprising:
- a linear picking area (10), comprising a linear sequence (11) of at least two picking subranges (12, 14), each picking subrange (12, 14) comprising a source subset (22, 24) with a predetermined plurality (N) of source containers (20) arranged side by side along the linear picking area (10);
- at least one target subset (42) comprising a predetermined plurality (N) of target containers (40) which corresponds to said predetermined plurality (N) of source containers (20) that are arranged in a picking subrange (12, 14),
- a target container transporter (100) configured to position each target subset (42) sequentially along the linear sequence (11) of the picking subranges (12, 14) of the linear picking area (10);
- a control system (60) configured to:
- receive a picking order (50) for the transfer of a predetermined collection of items (30) from at least one of the source containers (20) to at least one of the target containers (40) of a target subset (42);
- divide the picking order (50) into a picking sequence (51) comprising at least two picking suborders (52, 54), each of the picking suborders (52, 54) listing the transfer of items (30) from a respective source subset (22, 24) to a target subset (42);
- control the target container transporter (100) to sequentially position the target subset (42) in each of the picking subranges (12, 14) of the linear sequence (11), and to keep the respective target subset (42) positioned in the respective picking subrange (12, 14) until the associated picking suborder (52, 54) is completed.

2. An order picking assembly according to claim 1, **characterised in that** the control system (60) is further configured to:
- determine a respective picking suborder completion state (72, 74) when the listed items (30) of a respective picking suborder (52, 54) of the picking sequence (51) have been transferred to the target subset (42);
- control the target container transporter (100) to sequentially position, the respective target subset (42) in each of the picking subranges (12, 14) of the linear sequence (11)), and to keep the target subset (42) positioned in the respective picking subrange (12, 14) until the associated picking suborder completion state (72, 74) is reached.

3. An order picking assembly according to claim 1 or 2, **characterised in that** the control system (60) is further configured to:
- determine a picking order completion state (70) when the listed items (30) of the picking order (50) have been transferred to the target subset (42), and
- control the target container transporter (100) to position the respective target subset (42) out of the linear picking area (10) when the picking order completion state (70) is reached.

4. An order picking assembly according to any of the preceding claims, **characterised in that** the control system (60) is further configured to position the at least one target subset (42) from its current picking subrange (12) to its next picking subrange (14) of its linear sequence (11) when the picking suborder (52) associated with its current picking subrange (12) is completed.

5. An order picking assembly according to any of the preceding claims, **characterised in that** the order picking assembly (1) comprises at least two target subsets (42), and **in that** the control system (60) is further configured to concurrently perform at least two picking orders (50), each for a respective target subset (42), by controlling the target container transporter (100) to concurrently position each of the respective target subsets (42) in a different picking subrange (12, 14) of the linear sequence (11).

6. An order picking assembly according to claim 5, **characterised in that** the control system (60) is further configured to further control the target container transporter (100) to transfer the respective target subset (42) from its current picking subrange (12) to its next subrange (14) of the linear sequence (11) only when no other target container (40) is present in this next subrange (14).

7. An order picking assembly according to claim 5 or 6, **characterised in that** the control system (60) is further configured to further control the target container transporter (100) to transfer the respective target subset (42) from its current picking subrange (12) to its next subrange (14) of the linear sequence (11) only when the associated picking suborder (52, 54) of another target subset (42) in this next subrange (14) is completed.

8. An order picking assembly according to any of the preceding claims, **characterised in that** the target container transporter (100) comprises one or more of the following to position the target subset (42):
- active movement elements;
- passive movement elements combined with controllable movement inhibitors, such as for example an inclined roller track combined with retractable stops.

9. An order picking assembly according to any of the preceding claims, **characterised in that** the predetermined plurality (N) is an integer in the range of two to seven, preferably three to five.

10. An order picking assembly according to any of the preceding claims, **characterised in that** the linear picking area (10) extends along a linear picking area direction (110) comprising at least one of the following linear shapes or a combination thereof: a straight shape; an angled shape; a U shape; a curved shape; a circular shape.

11. A method of operating an order picking assembly according to any of the preceding claims, **characterised in that** the method comprises the steps of the control system (60):
- receiving a picking order (50) for the transfer of a predetermined collection of items (30) from at least one of the source containers (20) to at least one of the target containers (40) of a target subset (42);
- dividing the picking order (50) into a picking sequence (51) comprising at least two picking suborders (52, 54), each of the picking suborders (52, 54) listing the transfer of items (30) from a respective source subset (22, 24) to a target subset (42);
- controlling the target container transporter (100) to sequentially position the target subset (42) in each of the picking subranges (12, 14) of the linear sequence (11), and to keep the respective target subset (42) positioned in the respective picking subrange (12, 14) until the associated picking suborder (52, 54) is completed.

## Patentansprüche

1. Auftragskommissionierungsanordnung (1), umfassend:
- einen linearer Kommissionierungsbereich (10), umfassend eine lineare Sequenz (11) von wenigstens zwei Kommissionierungsteilbereichen (12, 14), wobei jeder Kommissionierungsteilbereich (12, 14) eine Ausgangsteilgruppe (22, 24) mit einer vorbestimmten Mehrzahl (N) von Ausgangsbehältern (20) umfasst, die entlang des linearen Kommissionierungsbereichs (10) nebeneinander angeordnet sind;
- wenigstens eine Zielteilgruppe (42), die eine vorbestimmte Mehrzahl (N) von Zielbehältern (40) umfasst, welche der vorbestimmten Mehrzahl (N) von Ausgangsbehältern (20) entspricht, die in einem Kommissionierungsteilbereich (12, 14) angeordnet sind;
- eine Zielbehälter-Transporteinheit (100), die so gestaltet ist, dass sie jede Zielteilgruppe (42) sequentiell entlang der linearen Sequenz (11) der Kommissionierungsteilbereiche (12, 14) des linearen Kommissionierungsbereichs (10) position iert;
- ein Steuersystem (60), das so gestaltet ist, dass es:
- einen Kommissionierungsauftrag (50) für die Übertragung einer vorbestimmten Artikelansammlung (30) von wenigstens einem der Ausgangsbehälter (20) zu wenigstens einem der Zielbehälter (40) einer Zielteilgruppe (42) empfängt;
- den Kommissionierungsauftrag (50) in eine Kommissionierungssequenz (51) aufteilt, die wenigstens zwei Kommissionierungs-Unteraufträge (52, 54) umfasst, wobei jeder Kommissionierungs-Unterauftrag (52, 54) die Übertragung von Artikeln (30) von einer entsprechenden Ausgangsteilgruppe (22, 24) zu einer Zielteilgruppe (42) aufführt;
- die Zielbehälter-Transporteinheit (100) so steuert, dass die Zielteilgruppe (42) sequentiell in jedem der Kommissionierungsteilbereiche (12, 14) der linearen Sequenz (11) positioniert wird, und um die entsprechende Zielteilgruppe (42) in dem entsprechenden Kommissionierungsteilbereich (12, 14) positioniert zu halten, bis der zugeordnete Kommissionierungs-Unterauftrag (52, 54) ausgeführt ist.

2. Auftragskommissionierungsanordnung nach Anspruch 1, **dadurch gekennzeichnet, dass** das Steuersystem (60) ferner so gestaltet ist, dass es:
- einen entsprechenden Kommissionierungs-Unterauftrags-Ausführungszustand (72, 74) bestimmt, wenn die aufgeführten Artikel (30) eines entsprechenden Kommissionierungs-Unterauftrags (52, 54) der Kommissionierungssequenz (51) zu der Zielteilgruppe (42) übertragen worden sind;
- die Zielbehälter-Transporteinheit (100) so steuert, dass die entsprechende Zielteilgruppe (42) sequentiell in jedem der Kommissionierungsteilbereiche (12, 14) der linearen Sequenz (11) positioniert wird, und um die Zielteilgruppe (42) in dem entsprechenden Kommissionierungsteilbereich (12, 14) positioniert zu halten, bis der zugeordnete Kommissionierungs-Unterauftrags-Ausführungszustand (72, 74) erreicht ist.

3. Auftragskommissionierungsanordnung nach Anspruch 1 oder 2, **dadurch gekennzeichnet, dass** das Steuersystem (60) ferner so gestaltet ist, dass es:
- einen entsprechenden Kommissionierungsauftrags-Ausführungszustand (70) bestimmt, wenn die aufgeführten Artikel (30) des Kommissionierungsauftrags (50) zu der Zielteilgruppe (42) übertragen worden sind;
- die Zielbehälter-Transporteinheit (100) so steuert, dass die entsprechende Zielteilgruppe (42) außerhalb des linearen Kommissionierungsbereichs (10) positioniert wird, wenn der Kommissionierungsauftrags-Ausführungszustand (70) erreicht ist.

4. Auftragskommissionierungsanordnung nach einem der vorstehenden Ansprüche, **dadurch gekennzeichnet, dass** das Steuersystem (60) ferner so gestaltet ist, dass es die wenigstens eine Zielteilgruppe (42) von deren aktuellen Kommissionierungsteilbereich (12) zu deren nächsten Kommissionierungsteilbereich (14) ihrer linearen Sequenz (11) positioniert, wenn der Kommissionierungs-Unterauftrag (52), der dem aktuellen Kommissionierungsteilbereich (12) zugeordnet ist, ausgeführt ist.

5. Auftragskommissionierungsanordnung nach einem der vorstehenden Ansprüche, **dadurch gekennzeichnet, dass** die Auftragskommissionierungsanordnung (1) wenigstens zwei Zielteilgruppen (42) umfasst, und wobei das Steuersystem (60) ferner so gestaltet ist, dass es gleichzeitig wenigstens zwei Kommissionierungsaufträge (50) ausführt, jeweils für eine entsprechende Zielteilgruppe (42), durch Steuerung der Zielbehälter-Transporteinheit (100), so dass jede der entsprechenden Zielteilgruppen (42) in einem anderen Kommissionierungsteilbereich (12, 14) der linearen Sequenz (11) positioniert wird.

6. Auftragskommissionierungsanordnung nach Anspruch 5, **dadurch gekennzeichnet, dass** das Steuersystem (60) ferner so gestaltet ist, dass es ferner die Zielbehälter-Transporteinheit (100) so steuert, dass die entsprechende Zielteilgruppe (42) von ihrem aktuellen Kommissionierungsteilbereich (12) nur dann zu ihrem nächsten Teilbereich (14) der linearen Sequenz (11) übertragen wird, wenn sich kein anderer Zielbehälter (40) in dessen nächsten Teilbereich (14) befindet.

7. Auftragskommissionierungsanordnung nach Anspruch 5 oder 6, **dadurch gekennzeichnet, dass** das Steuersystem (60) ferner so gestaltet ist, dass es ferner die Zielbehälter-Transporteinheit (100) so steuert, dass die entsprechende Zielteilgruppe (42) von ihrem aktuellen Kommissionierungsteilbereich (12) nur dann zu ihrem nächsten Teilbereich (14) der linearen Sequenz (11) übertragen wird, wenn der zugeordnete Kommissionierungs-Unterauftrag (52, 54) einer anderen Zielteilgruppe (42) in dessen nächsten Teilbereich (14) ausgeführt ist.

8. Auftragskommissionierungsanordnung nach einem der vorstehenden Ansprüche, **dadurch gekennzeichnet, dass** die Zielbehälter-Transporteinheit (100) eines oder mehrere der folgenden zur Positionierung der Zielteilgruppe (42) umfasst:
- aktive Bewegungselemente;
- passive Bewegungselemente in Kombination mit steuerbaren Bewegungshemmern, wie etwa einer schrägen Rollenbahn in Kombination mit einziehbaren Stoppern.

9. Auftragskommissionierungsanordnung nach einem der vorstehenden Ansprüche, **dadurch gekennzeichnet, dass** die vorbestimmte Mehrzahl (N) eine ganze Zahl zwischen zwei und sieben, vorzugsweise zwischen drei und fünf ist.

10. Auftragskommissionierungsanordnung nach einem der vorstehenden Ansprüche, **dadurch gekennzeichnet, dass** sich der lineare Kommissionierungsbereich (10) entlang einer linearen Kommissionierungsbereichsrichtung (110) erstreckt, die wenigstens eine der folgenden linearen Formen oder eine Kombination dieser umfasst: eine gerade Form, eine Winkelform, eine U-Form, eine gekrümmte Form, eine runde Form.

11. Verfahren für den Betrieb einer Auftragskommissionierungsanordnung nach einem der vorstehenden Ansprüche, **dadurch gekennzeichnet, dass** das Verfahren die Schritte des Steuersystems (60) umfasst:
- Empfangen eines Kommissionierungsauftrags (50) für die Übertragung einer vorbestimmten Artikelansammlung (30) von wenigstens einem der Ausgangsbehälter (20) zu wenigstens einem der Zielbehälter (40) einer Zielteilgruppe (42) empfängt;
- Aufteilen des Kommissionierungsauftrags (50) in eine Kommissionierungssequenz (51), die wenigstens zwei Kommissionierungs-Unteraufträge (52, 54) umfasst, wobei jeder Kommissionierungs-Unterauftrag (52, 54) die Übertragung von Artikeln (30) von einer entsprechenden Ausgangsteilgruppe (22, 24) zu einer Zielteilgruppe (42) aufführt;
- Steuern der Zielbehälter-Transporteinheit (100), so dass die Zielteilgruppe (42) sequentiell in jedem der Kommissionierungsteilbereiche (12, 14) der linearen Sequenz (11) positioniert wird, und um die entsprechende Zielteilgruppe (42) in dem entsprechenden Kommissionierungsteilbereich (12, 14) positioniert zu halten, bis der zugeordnete Kommissionierungs-Unterauftrag (52, 54) ausgeführt ist.

## Revendications

1. Ensemble de préparation de commandes (1) comprenant :
une zone de préparation linéaire (10), comprenant une séquence linéaire (11) d'au moins deux sous-plages de préparation (12, 14), chaque sous-plage de préparation (12, 14) comprenant un sous-ensemble source (22, 24) ayant une pluralité prédéfinie (N) de contenants sources (20) disposés côte à côte le long de la zone de préparation linéaire (10) ;
au moins un sous-ensemble cible (42) comprenant une pluralité prédéfinie (N) de contenants cibles (40) qui correspond à ladite pluralité prédéfinie (N) de contenants sources (20) qui sont disposés dans une sous-plage de préparation (12, 14),
un transporteur (100) de contenant cible conçu pour positionner séquentiellement chaque sous-ensemble cible (42) le long de la séquence linéaire (11) des sous-plages de préparation (12, 14) de la zone de préparation linéaire (10) ;
un système de commande (60) conçu pour :
recevoir une commande à préparer (50) pour le transfert d'un ensemble prédéfini d'articles (30) d'au moins l'un des contenants sources (20) vers au moins l'un des contenants cibles (40) d'un sous-ensemble cible (42) ;
diviser la commande à préparer (50) en une séquence de préparation (51) comprenant au moins deux sous-commandes à préparer (52, 54), chacune des sous-commandes à préparer (52, 54) établissant la liste du transfert d'articles (30) d'un sous-ensemble source (22, 24) respectif à un sous-ensemble cible (42) ;
commander le transporteur (100) de contenant cible de sorte à séquentiellement positionner le sous-ensemble cible (42) dans chaque sous-plage de préparation (12, 14) de la séquence linéaire (11), et à maintenir le sous-ensemble cible (42) respectif positionné dans la sous-plage de préparation (12, 14) jusqu'à ce que la sous-commande à préparer (52, 54) associée soit terminée.

2. Ensemble de préparation de commande selon la revendication 1, **caractérisé en ce que** le système de commande (60) est en outre conçu pour :
déterminer un état d'achèvement (72, 74) de sous-commande à préparer respectif lorsque les articles énumérés (30) d'une sous-commande à préparer (52, 54) respective de la séquence de préparation (51) ont été transférés au sous-ensemble cible (42) ;
commander le transporteur (100) de contenant cible de sorte à séquentiellement positionner le sous-ensemble cible (42) respectif dans chaque sous-plage de préparation (12, 14) de la séquence linéaire (11), et à maintenir le sous-ensemble cible (42) positionné dans la sous-plage de préparation (12, 14) respective jusqu'à ce que l'état d'achèvement (72, 74) de sous-commande à préparer associé soit atteint.

3. Ensemble de préparation de commande selon la revendication 1 ou 2, **caractérisé en ce que** le système de commande (60) est en outre conçu pour :
déterminer un état d'achèvement (70) de commande à préparer lorsque les articles énumérés (30) de la commande à préparer (50) ont été transférés au sous-ensemble cible (42), et
commander au transporteur (100) de contenant cible de positionner le sous-ensemble cible (42) respectif hors de la zone de préparation linéaire (10) lorsque l'état d'achèvement (70) de commande à préparer est atteint.

4. Ensemble de préparation de commande selon l'une quelconque des revendications précédentes, **caractérisé en ce que** le système de commande (60) est en outre conçu pour positionner l'au moins un sous-ensemble cible (42) de sa sous-plage de préparation actuelle (12) à sa sous-plage de préparation suivante (14) de sa séquence linéaire (11) lorsque la sous-commande à préparer (52) associée à sa sous-plage de préparation actuelle (12) est terminée.

5. Ensemble de préparation de commande selon l'une quelconque des revendications précédentes, **caractérisé en ce que** l'ensemble de préparation de commande (1) comprend au moins deux sous-ensembles cibles (42), et **en ce que** le système de commande (60) est en outre conçu pour effectuer simultanément au moins deux commandes à préparer (50), chacune pour un sous-ensemble cible (42) respectif, en commandant le transporteur (100) de contenant cible de sorte à positionner simultanément chacun des sous-ensembles cibles (42) respectifs dans une sous-plage de préparation (12, 14) différente de la séquence linéaire (11).

6. Ensemble de préparation de commande selon la revendication 5, **caractérisé en ce que** le système de commande (60) est en outre conçu pour commander également le transporteur (100) de contenant cible de sorte à transférer le sous-ensemble cible (42) respectif de sa sous-plage de préparation actuelle (12) à sa sous-plage suivante (14) de la séquence linéaire (11) uniquement lorsqu'aucun autre contenant cible (40) n'est présent dans cette sous-plage suivante (14).

7. Ensemble de préparation de commande selon la revendication 5 ou 6, **caractérisé en ce que** le système de commande (60) est en outre conçu pour commander également le transporteur (100) de contenant cible de sorte à transférer le sous-ensemble cible (42) respectif de sa sous-plage de préparation actuelle (12) à sa sous-plage suivante (14) de la séquence linéaire (11) uniquement lorsque la sous-commande à préparer (52, 54) associée d'un autre sous-ensemble cible (42) dans cette sous-plage suivante (14) est terminée.

8. Ensemble de préparation de commande selon l'une quelconque des revendications précédentes, **caractérisé en ce que** le transporteur (100) de contenant cible comprend un ou plusieurs des éléments suivants pour positionner le sous-ensemble cible (42) :
des éléments mobiles actifs ;
des éléments mobiles passifs associés à des inhibiteurs de mouvement pouvant être commandés, tels qu'une piste à rouleaux inclinée combinée à des butées escamotables.

9. Ensemble de préparation de commande selon l'une quelconque des revendications précédentes, **caractérisé en ce que** la pluralité prédéfinie (N) est un nombre entier de l'ordre de deux à sept, de préférence de trois à cinq.

10. Ensemble de préparation de commande selon l'une quelconque des revendications précédentes, **caractérisé en ce que** la zone de prélèvement linéaire (10) s'étend le long d'une direction (110) de zone de préparation linéaire comprenant au moins l'une des formes linéaires suivantes ou une combinaison de celles-ci : une forme droite ; une forme coudée ; une forme de U ; une forme courbe ; une forme circulaire.

11. Procédé de fonctionnement d'un ensemble de préparation de commande selon l'une quelconque des revendications précédentes, **caractérisé en ce que** le procédé comprend les étapes du système de commande (60) suivantes consistant à :
recevoir une commande à prépare (50) pour le transfert d'un ensemble prédéfini d'articles (30) d'au moins l'un des contenants sources (20) vers au moins l'un des contenants cibles (40) d'un sous-ensemble cible (42) ;
diviser la commande à préparer (50) en une séquence de préparation (51) comprenant au moins deux sous-commandes à préparer (52, 54), chacune des sous-commandes à préparer (52, 54) établissant la liste du transfert d'articles (30) d'un sous-ensemble source (22, 24) respectif à un sous-ensemble cible (42) ;
commander le transporteur (100) de contenant cible de sorte à séquentiellement positionner le sous-ensemble cible (42) dans chaque sous-plage de préparation (12, 14) de la séquence linéaire (11), et à maintenir le sous-ensemble cible (42) respectif positionné dans la sous-plage de préparation (12, 14) respective jusqu'à ce que la sous-commande à préparer (52, 54) associée soit terminée.
